# EUROPÄISCHE PATENTSCHRIFT

(11) **EP 4 563 860 B1**
(45) Veröffentlichungstag und Bekanntmachung des Hinweises auf die Patenterteilung: **25.02.2026**
(21) Anmeldenummer: 24201532.9
(22) Anmeldetag: 20.09.2024
(51) Int. Cl.: F16K 31/06

(54) **ANKERSYSTEM, VENTILSYSTEM UND MAGNETVENTIL SOWIE VERFAHREN ZUR HERSTELLUNG EINES VENTILSYSTEMS**
ARMATURE SYSTEM, VALVE SYSTEM AND SOLENOID VALVE, AND METHOD FOR PRODUCING A VALVE SYSTEM
SYSTÈME D'ANCRAGE, SYSTÈME DE SOUPAPE ET ÉLECTROVANNE ET PROCÉDÉ DE FABRICATION D'UN SYSTÈME DE SOUPAPE

(30) Priorität: 30.11.2023 DE 102023133515
(43) Veröffentlichungstag der Anmeldung: 04.06.2025
(73) Patentinhaber: nass magnet GmbH, 30179 Hannover (DE)
(72) Erfinder: Brockmann, Dana, 21244 Buchholz i.d.N (DE); Paetz, Robin, 31319 Sehnde (DE); Krou, Dimitri, 31275 Lehrte (DE); Rust, Carsten, 30823 Garbsen (DE); Westphal, Sebastian, 30880 Laatzen (DE); Cordes, Michel, 30926 Seelze (DE); Hölscher, Reiner, 30926 Seelze (DE)
(74) Vertreter: Tetzner, Michael

(56) Entgegenhaltungen:
- CH-A5- 650 320
- DE-A1- 3 134 756
- JP-A- 2020 172 955
- US-A1- 2014 333 398

## Beschreibung

Die Erfindung betrifft ein Ankersystem für ein Magnetventil, ein Ventilsystem, ein Magnetventil und ein Verfahren zur Herstellung eines Ventilsystems.

Ein Magnetventil ist ein elektromechanisch betätigtes Bauteil zur Steuerung von gasförmigen oder flüssigen Medien. Es wird zum Öffnen, Schließen, Mischen oder Umleiten von Medien in einer Anwendung verwendet. Sie kommen in einer Vielzahl von Anwendungen, beispielsweise in Geschirrspülern, Autos, Bewässerungssystemen, oder zur Steuerung von Druckluft oder inerten technischen Gasen zum Einsatz.

Ein wesentliches Bauteil des Magnetventils stellt das Ankersystem dar, welches einen Magnetkern, einen Magnetanker und eine rohrförmige Ankerführung umfasst. Während der Magnetanker üblicherweise gegen den Druck einer Ankerfeder in der Ankerführung verschiebbar geführt wird, ist der teilweise in die Ankerführung eingeführte Magnetkern fest mit der Ankerführung verbunden. Die Ankerführung besteht häufig aus Messing oder Edelstahl und wird mit dem metallischen Magnetkern im Bereich einer im Magnetkern befindlichen, umlaufenden Nut verpresst.

Aus der DE 10 2012 011 627 A1 ist die Ankerführung über eine radiale Verjüngung des Magnetkerns geschoben und mit dieser mittels einer Press- und/oder Klebeverbindung druckdicht und druckfest verbunden. Weiterhin wird ein Magnetventil beschrieben, das einen Spulenkörper zeigt, der an der Kern-Ankerführungseinheit, das heißt an dem Kern und an der Ankerführung mittels Spritzgießen eines Kunststoffs angeformt ist. Der Kern weist hierfür eine rotationssymmetrisch um die Spulenlängsachse 32 angeordnete Verjüngung in Form einer Ringnut auf, in die der Spulenkörper eingreift, sodass Spulenkörper und Magnetkern formschlüssig miteinander verbunden sind.

Die DE 10 2007 028 910 B3 offenbart ein Elektromagnetventil, bei welchem der Kern direkt in einem Fertigungsschritt beim Spritzen der Lagerbuchse (Ankerführung) mit eingespritzt wird, wobei der Kern eine Umfangsnut aufweist, in die sich der Kunststoff der Lagerbuchse beim Einspritzen setzen kann, sodass die Lage des Kerns axial zusätzlich fixiert ist. Diese Ausführung hat aber den Nachteil, dass die relative Lage des Kerns zur Lagerbuchse, während der Montage des Elektromagnetventils nicht mehr verändert werden kann.

Die CH 650 320 A5 beschreibt ein Magnetventil, bei dem die Einstellung des Hubs des beweglichen Magnetkerns durch axiales Verschieben des feststehenden Kerns mittels einer Gewindeverbindung erfolgt. Bei einer alternativen Ausführungsform erfolgt die Einstellung beispielsweise mittels eines Ankers und durch maßgenaues Eintreiben des Festkerns.

Ein weiteres elektromagnetisches Wegeventil ist aus der DE 31 34 756 A1 bekannt, bei dem die elektromagnetisch betätigte Aufwärtsbewegung des Ventilkolbens entgegen der Kraft einer Feder erfolgt.

Der Erfindung liegt die Aufgabe zugrunde, eine kostengünstigere Fertigung des Ankersystems bzw. des Magnetventils zu ermöglichen.

Die Aufgabe wird erfindungsgemäß durch die Merkmale der Ansprüche 1, 8, 10 und 11 gelöst.

Erfindungsgemäß wird diese Aufgabe durch ein Ankersystem für ein Magnetventil gelöst, umfassend einen Magnetkern, einen Magnetanker und eine rohrförmige Ankerführung zur Führung des Magnetankers, wobei die Ankerführung aus Kunststoff gefertigt ist und der Magnetkern mit der Ankerführung über eine formschlüssige Verbindung verbunden ist, die durch eine thermoplastische Verformung der Ankerführung gebildet wird.

Das erfindungsgemäße Ventilsystem umfasst einen Ventilkörper und ein im Ventilkörper montiertes erfindungsgemäßes Ankersystem, während das erfindungsgemäße Magnetventil neben dem erfindungsgemäßen Ventilsystem noch eine Magnetspule aufweist.

Beim erfindungsgemäßen Verfahren zur Herstellung eines Ventilsystems sind folgende Verfahrensschritte vorgesehen:
- ein Magnetanker wird zusammen mit einer Ankerfeder in eine Ankerführung aus Kunststoff eingesetzt,
- nachfolgend wird die Ankerführung mit dem Magentanker und der Ankerfeder in einen Ventilkörper unter Kompression der Ankerfeder eingeschoben,
- die Kompressionsstellung der Ankerfeder, die einem gewünschten Öffnungsdruck des Ventilsystems entspricht, wird durch Relativverschiebung von Ankerführung und Ventilkörper eingestellt,
- die Ankerführung und der Ventilkörper werden in der Kompressionsstellung, die dem gewünschten Öffnungsdruck des Ventilsystems entspricht, miteinander fixiert,
- an einem vom Ventilkörper abgewandten Ende der Ankerführung wird ein Magnetkern in die Ankerführung auf ein vorgegebenes Maß eingeschoben und
- anschließend werden der Magnetkern und die Ankerführung durch lokale thermoplastische Verformung der Ankerführung miteinander verbunden.

Kunststoffmaterial für die Ankerführung ist gegenüber den sonst üblichen Metallausführungen, insbesondere Messing oder Edelstahl, deutlich kostengünstiger. Außerdem hat die thermoplastische Verformung, die lokal im Bereich der formschlüssigen Verbindung zwischen Magnetkern und Ankerführung durchgeführt wird, den weiteren Vorteil, dass der Magnetkern während der Montage durch Relativverschiebung des Magnetkerns in der Ankerführung auf Maß eingesetzt werden kann, wodurch Fertigungstoleranzen, beispielsweise bei der Länge der Ankerführung, ausgeglichen werden können. Ein weiterer Vorteil besteht darin, dass mit gleichen Bauteilen, insbesondere gleichen Federn unterschiedliche Anforderungen an den Öffnungsdruck oder den Durchfluss eingestellt werden können

Weitere Ausgestaltungen der Erfindung sind Gegenstand der Unteransprüche.

Gemäß einer Ausgestaltung der Erfindung weist der Magnetkern im Bereich der formschlüssigen Verbindung mit der Ankerführung auf seiner mit der Ankerführung in Verbindung kommenden Außenseite Aussparungen zur Aufnahme von durch die thermoplastische Verformung der Ankerführung verformtem Kunststoff auf. Diese Aussparungen können beispielsweise durch Rillen, Nuten, insbesondere Ringnuten, Vertiefungen oder dergleichen gebildet werden. Somit sind der Magnetkern und die Ankerführung formschlüssig miteinander verbunden und der Magnetkern bleibt auch bei größeren mechanischen oder thermischen Belastungen mit der Ankerführung sicher verbunden.

Die Ankerführung besteht zweckmäßigerweise aus einem thermoplastischen Kunststoffmaterial, welches gegebenenfalls auch faserverstärkt, insbesondere glasfaserverstärkt, ausgebildet sein kann.

Erfindungsgemäß kann zur Rückstellung des Magnetankers eine Ankerfeder vorgesehen werden. In einer bevorzugten Ausführungsform stützt sich die Ankerfeder mit einem Ende am Magnetanker und mit einem anderen Ende an einem Widerlager ab. Die Wahl eines geeigneten Widerlagers hängt primär davon ab, ob ein stromlos geschlossenes oder stromlos offenes Magnetventil entstehen soll. Bei der stromlos geschlossenen Variante ist das Widerlager so anzuordnen, dass der Magnetanker durch die Ankerfeder - in einem im Magnetventil eingebauten Zustand - aus der Ankerführung herausgedrückt wird und dadurch das Ventil geschlossen wird. Dies könnte dadurch erreicht werden, dass sich die Ankerfeder mit dem einen Ende an einem im Inneren der Ankerführung ausgebildeten Absatz und mit dem anderen Ende an einer flanschartigen Erweiterung des Magnetankers abstützt.

In einer weiteren erfindungsgemäßen Ausgestaltung des Ventilsystems weist das Ankersystem zur Rückstellung des Magnetankers eine Ankerfeder auf und der Ventilkörper ist derart ausgebildet, dass das Ankersystem unter Kompression der Ankerfeder bei der Montage axial verschiebbar im Ventilkörper geführt ist und die Ankerführung und der Ventilkörper in einer Kompressionsstellung der Ankerfeder, die einem gewünschten Öffnungsdruck des Magnetventils entspricht, miteinander fixiert sind, wobei das Fixieren der Ankerführung in dem Ventilkörper vorzugsweise mittels Laserstrahlschweißen erfolgt. Es sind aber auch andere Verbindungstechniken, wie beispielsweise Press-, Klebe-, Schneidklemm-, Krimp-, Bördel- oder Schraubverbindungen denkbar.

Die thermoplastische Verformung kann auf unterschiedliche Art und Weise erfolgen, so ist es denkbar, dass
- ein Energieeintrag über den Magnetkern erfolgt oder
- ein Energieeintrag über die Ankerführung im Bereich der herzustellenden formschlüssigen Verbindung erfolgt oder
- eine separate Erwärmung von Magnetkern und Ankerführung und ein anschließendes Fügen durchgeführt werden.

Gemäß einer bevorzugten Ausgestaltung der Erfindung wird die thermoplastische Verformung der Ankerführung im Bereich des Magnetkerns durch Erwärmung der Fügestelle (Bereich der herzustellenden formschlüssigen Verbindung) und anschließendes Umformen durchgeführt.

Weitere Ausgestaltungen der Erfindung werden anhand der nachfolgenden Beschreibung eines Ausführungsbeispiels und der Zeichnung näher erläutert.

In der Zeichnung zeigen
- Fig. 1: ein erfindungsgemäßes Ventilsystem in einer ersten axiale Relativstellung von Ventilkörper und Ankerführung,
- Fig. 2: ein erfindungsgemäßes Ventilsystem in einer zweiten axiale Relativstellung von Ventilkörper und Ankerführung,
- Fig. 3: ein erfindungsgemäßes Magnetventil mit dem Ventilsystem gemäß Fig. 1,
- Fig. 4: ein erfindungsgemäßes Magnetventil mit dem Ventilsystem gemäß Fig. 2,
- Fig. 5: einen ersten Verfahrensschritt bei der Herstellung des Ventilsystems, bei dem der Magentanker und die Ankerführung zusammengefügt werden,
- Fig. 6: den Zustand des Ventilsystems nach dem ersten Verfahrensschritt,
- Fig. 7: einen zweiten Verfahrensschritt bei der Herstellung des Ventilsystems, bei dem der Ventilkörper und die Ankerführung zusammengefügt werden,
- Fig. 8: den Zustand des Ventilsystems nach dem zweiten Verfahrensschritt,
- Fig. 9: einen dritten Verfahrensschritt bei der Herstellung des Ventilsystems, bei dem die Kompressionsstellung der Ankerfeder, die einem gewünschten Öffnungsdruck des Magnetventils entspricht, durch Relativverschiebung von Ankerführung und Ventilkörper eingestellt wird,
- Fig. 10: den Zustand des Ventilsystems nach dem dritten Verfahrensschritt,
- Fig. 11: einen vierten Verfahrensschritt bei der Herstellung des Ventilsystems, bei dem der Magnetkern in die Ankerführung auf ein vorgegebenes Maß eingeschoben wird,
- Fig. 12: einen fünften Verfahrensschritt bei der Herstellung des Ventilsystems, bei dem der Magnetkern und die Ankerführung durch lokale thermoplastische Verformung der Ankerführung miteinander verbunden werden und
- Fig. 13: das fertig hergestellte Ventilsystem.

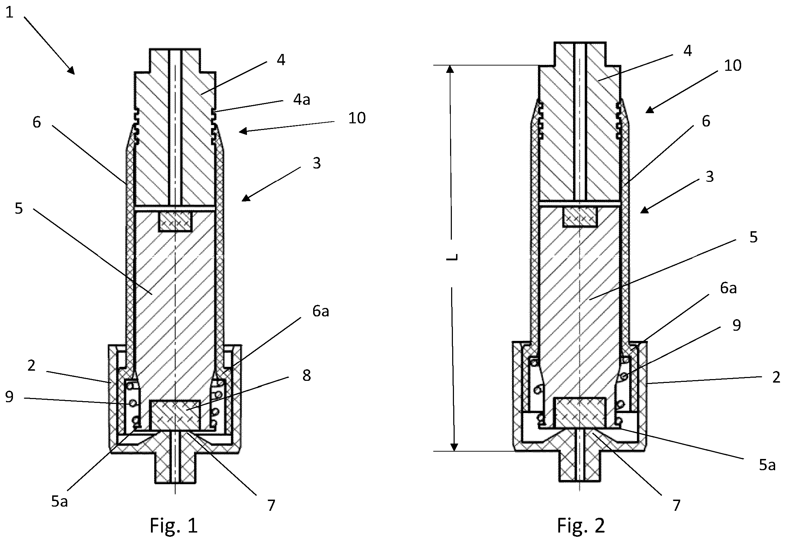

Das in Fig. 1 dargestellte Ventilsystem 1 weist einen Ventilkörper 2 und ein im Ventilkörper montiertes Ankersystem 3 auf. Das Ankersystem 3 besteht im Wesentlichen aus einem Magnetkern 4, einem Magnetanker 5 und einer rohrförmigen Ankerführung 6 zur Führung des Magnetankers 5. Der Ventilkörper weist einen Ventilsitz 7 auf, der mit einer im Magnetanker 5 angeordneten Sitzdichtung 8 zusammenwirkt. Im dargestellten Ausführungsbeispiel wird der Magnetanker 5 mit seiner Sitzdichtung 8 durch den Druck einer Ankerfeder 9 auf den Ventilsitz 7 gedrückt, was der Schließstellung des Ventilsystems entspricht.

Die Ankerfeder 9 stützt sich mit einem Ende an einer flanschartigen Erweiterung 5a des Magnetankers 5 und mit seinem anderen Ende an einem im Inneren der Ankerführung 6 ausgebildeten Absatz 6a ab. Zur Ausbildung des Absatzes 6a weist die Ankerführung an ihrem in dem Ventilkörper befindlichen Ende einen etwas größeren Außen- und Innendurchmesser auf. Die Ankerfeder 9 ist zudem konisch ausgebildet, wobei sich das Ende mit dem größeren Durchmesser am Absatz 6a der Ankerführung 6 und das Ende mit dem kleineren Durchmesser an der flanschartigen Erweiterung 5a des Magnetankers 5 abstützt. Im Rahmen der Erfindung sind aber auch zylindrische Ankerfedern denkbar. Dies wird beispielsweise dadurch ermöglicht, dass die flanschartige Erweiterung 5a (Ankerteller) des Magnetankers 5 entsprechend größer ausgebildet ist.

Der Ventilkörper 2 ist derart ausgebildet ist, dass das Ankersystem 3 unter Kompression der Ankerfeder 9 bei der Montage axial verschiebbar im Ventilkörper 2 geführt ist. Durch eine Relativverschiebung von Ankerführung 6 und Ventilkörper 2 verändert sich die Kompression der Ankerfeder 3 und damit der Druck, mit dem die Sitzdichtung 8 auf den Ventilsitz 7 gedrückt wird. Insofern kann durch die Relativstellung von Ankerführung 6 und Ventilkörper 2 ein gewünschter Öffnungsdruck des Ventilsystems 1 eingestellt werden. Bei der Montage des Ventilsystems 1 werden die Ankerführung 6 und der Ventilkörper 2 in einer Kompressionsstellung der Ankerfeder 9, die einem gewünschten Öffnungsdruck des Ventilsystems 1 entspricht, miteinander fixiert, wobei das Fixieren vorzugsweise mittels Laserstrahlschweißen erfolgt.

In den Fig. 1 und 2 sind zwei unterschiedliche Relativstellungen der Ankerführung 6 und des Ventilkörpers 2 dargestellt. Im Ausführungsbeispiel der Fig. 1 ist die Ankerführung 6 weiter in den Ventilkörper 2 hineingeschoben, wodurch die Ankerfeder 9 stärker komprimiert wird als im Ausführungsbeispiel der Fig. 2. Mit dem Ausführungsbeispiel der Fig. 1 wird damit eine entsprechend stärkerer Öffnungsdruck realisiert.

Die Ankerführung 6 ist erfindungsgemäß aus Kunststoff, insbesondere einem thermoplastischen Kunststoffmaterial, gefertigt. Dies ermöglicht eine formschlüssige Verbindung von Magnetkern 4 und Ankerführung 6 über eine lokale thermoplastische Verformung der Ankerführung 6. Hierzu weist der Magnetkern 4 im Bereich 10 der formschlüssigen Verbindung mit der Ankerführung 6 auf seiner mit der Ankerführung 6 in Verbindung kommenden Außenseite mit Aussparungen 4a zur Aufnahme von durch die thermoplastische Verformung der Ankerführung 6 verformtem Kunststoff auf. Diese Aussparungen 4a können beispielsweise durch Rillen, (Ring-)Nuten, Vertiefungen oder dergleichen gebildet werden.

Bei der Herstellung des Ventilsystems 1 besteht nun die Möglichkeit den Magnetkern 4 bis auf ein vorgegebenes Maß in die Ankerführung 6 einzuschieben, um auf diese Weise eine vorgegebene Länge L des Ventilsystems 1 einstellen zu können (Fig. 2) und zwar unabhängig davon, wie weit die Ankerführung 6 in den Ventilkörper eingeschoben ist. Auf diese Weise können bei vorgegebener Länge des Ventilsystems nicht nur unterschiedliche Öffnungsdrücke oder Durchflussöffnungen eingestellt, sondern auch sonstige Fertigungstoleranzen bei der Ankerführung 6 und/oder der Ankerfeder 9 ausgeglichen werden.

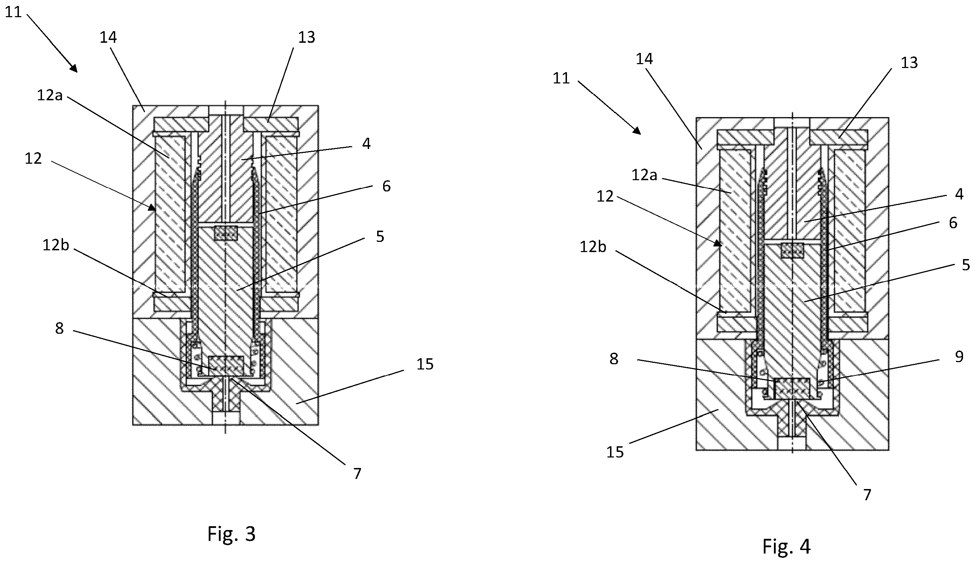

Fig. 3 zeigt ein Magnetventil 11 mit dem Ventilsystem 1 gemäß Fig. 1. Darüber hinaus ist eine Magnetspule 12 mit Windungen 12a und Spulenkörper 12b sowie ein Joch 13 ersichtlich. Magnetspule 12 und Joch 13 sind mit einer Magnetspulenummantelung 14 eingehaust. Auch der Ventilkörper 2 ist innerhalb eines Ventilgehäuses 15 angeordnet. Sowohl die Magnetspulenummantelung 14 als auch das Ventilgehäuse 15 werden vorzugsweise aus Kunststoffspritzguss gebildet.

Das in Fig. 4 dargestellte Magnetventil unterscheidet sich nur dadurch, dass das Ventilsystem 1 gemäß Fig. 2 eingesetzt ist, welches mit der gleichen Ankerfeder 9 einen geringeren Öffnungsdruck erfordert, aber ansonsten die gleichen Außenabmessungen aufweist.

Durch Betätigung der Magnetspule 12 wird der Magnetanker 5 unter weiterer Kompression der Ankerfeder 5 gegen den Magnetkern 4 gezogen, sodass die Sitzdichtung 8 vom Ventilsitz 9 abgehoben und das Ventil somit geöffnet wird. Wird die Bestromung der Magnetspule 12 wieder unterbrochen, erfolgt durch die Ankerfeder 9 eine Rückstellung des Magnetankers 5 in die Schließstellung, in der die Sitzdichtung 8 mit dem durch die (Vor-)Kompression der Ankerfeder 9 eingestellten Druck auf den Ventilsitz 7 gedrückt wird.

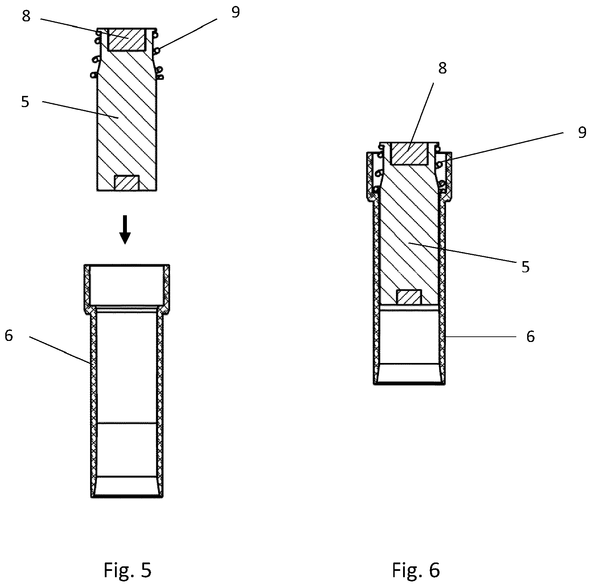

Anhand der Fig. 5 bis 13 werden die einzelnen Schritte bei der Herstellung des Ventilsystems 1 näher erläutert.

Im ersten Verfahrensschritt gemäß Fig. 5 wird der Magnetanker 5 zusammen mit der Ankerfeder 9 in die Ankerführung 6 eingesetzt, sodass sich das erste Zwischenprodukt 100 gemäß Fig. 6 ergibt.

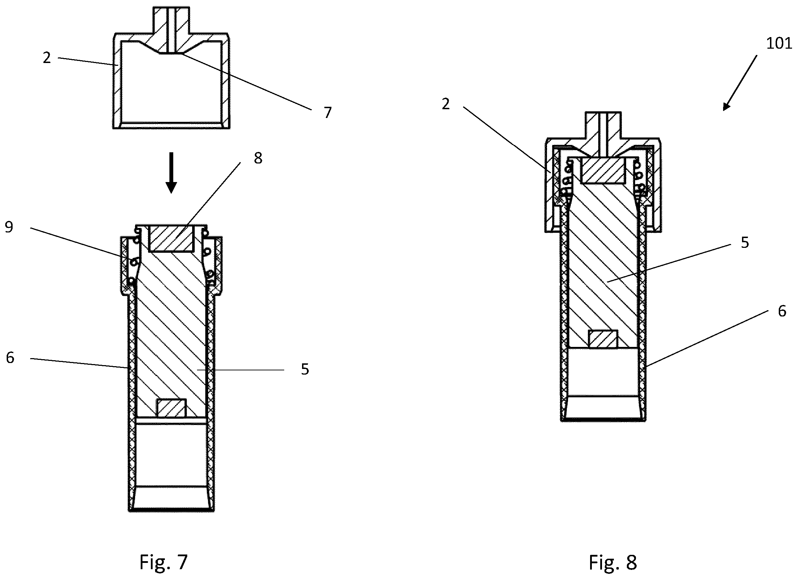

Im zweiten Verfahrensschritt gemäß Fig. 7 wird die Ankerführung 6 unter Kompression der Ankerfeder 9 in den Ventilkörper 2 eingeschoben, sodass das zweite Zwischenprodukt 101 gemäß Fig. 8 entsteht, wobei hier der minimale Einbauraum (Ankerführung 6 ist vollständig in den Ventilkörper 2 gedrückt) mit maximaler Vorspannung der Ankerfeder 9 gezeigt ist.

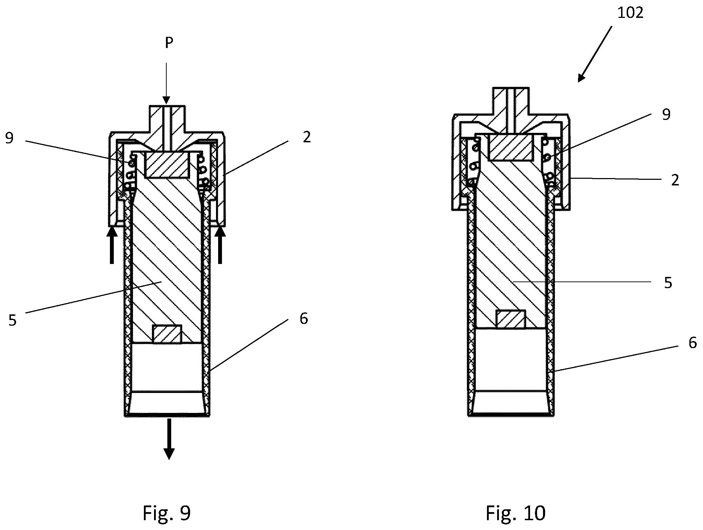

Im dritten Verfahrensschritt (Fig. 9) wird die Kompressionsstellung der Ankerfeder 9, die einem gewünschten Öffnungsdruck P des Ventilsystems 1 entspricht, durch Relativverschiebung von Ankerführung 6 und Ventilkörper 2 eingestellt. Hierzu wird beispielsweise zunächst der Ventilkörper 2 fixiert und die Ankerführung 6 komplett in den Ventilkörper 2 eingeschoben, sodass die Ankerfeder maximal komprimiert ist. Anschließend wird am Ventilsitz ein Druck P angelegt, der dem gewünschten Öffnungsdruck entsprechen soll. Sodann wird die Ankerführung 6 langsam aus dem Ventilkörper 2 herausgezogen, bis der Druck der Ankerfeder 9 nicht mehr ausreicht, die Sitzdichtung 8 auf dem Ventilsitz 7 zu halten. Die sich dabei ergebende Relativstellung von Ventilkörper 2 und Ankerführung 6 stellt die Kompressionsstellung der Ankerfeder 9 dar, die dem gewünschten Öffnungsdruck P des Ventilsystems 1 entspricht. In dieser Relativstellung werden dann die Ankerführung 6 und der Ventilkörper 2 miteinander beispielsweise mittels Laserstrahlschweißen fixiert. Das sich dadurch ergebende dritte Zwischenprodukt 102 ist in Fig. 10 dargestellt.

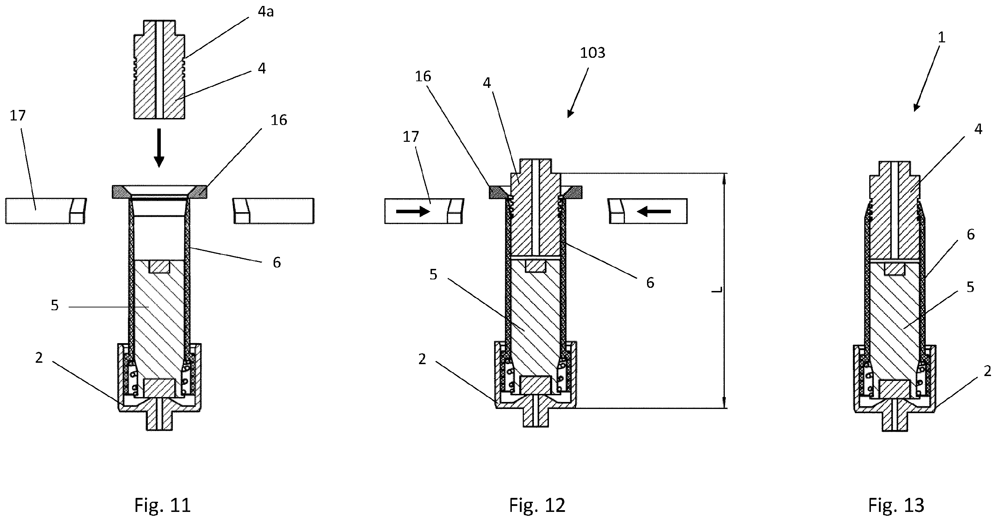

Im vierten Verfahrensschritt entsteht das vierte Zwischenprodukt 103, indem der Magnetkern 4 gemäß Fig. 11 in die Ankerführung 6 bis auf ein vorgegebenes Maß (Fig. 12) eingeschoben wird. Das vorgegebene Maß ist beispielsweise die Länge L, gemessen zwischen einem Absatz des Magnetkerns 4 und einem Absatz des Ventilkörpers 2 gemäß Fig. 12. Man könnte aber beispielsweise auch die Gesamtlänge des Ventilsystems 1 hierfür heranziehen.

Im fünften und letzten Verfahrensschritt wird der Magnetanker 4 und die Ankerführung 6 durch lokale thermoplastische Verformung der Ankerführung 6 miteinander verbunden. Hierzu kann Ankerführung 6 beispielsweise über eine Wärmequelle 16 im Bereich 10 der formschlüssigen Verbindung erwärmt und anschließend mit einem Umformwerkzeug 17 umgeformt werden (Fig. 12)

Nach diesem Verfahrensschritt ist das Ventilsystem 1 fertiggestellt (Fig. 13).

Selbstverständlich weist das Ventilsystem 1 auch die üblichen Dichtungen auf, die jedoch in der obigen Beschreibung nicht explizit erwähnt wurden. So wird beispielsweise der Magnetkern 4 mit einer O-Ring-Dichtung in die Ankerführung 6 eingeschoben. Auch das aus der Ankerführung 6 herausragende Ende des Magnetkerns 6 ist mit einer weiteren Dichtung versehen. Ferner wird der Ventilkörper 2 mit Dichtungen bestückt, bevor er in das Ventilgehäuses 15 eingebaut wird.

## Patentansprüche

1. Ankersystem (3) für ein Magnetventil (11) mit einem Magnetkern (4), einem Magnetanker (5) und einer rohrförmigen Ankerführung (6) zur Führung des Magnetankers (5), wobei die Ankerführung (6) aus Kunststoff gefertigt ist und der Magnetkern (4) mit der Ankerführung (6) über eine formschlüssige Verbindung verbunden ist,
**dadurch gekennzeichnet, dass** die formschlüssige Verbindung durch eine lokale thermoplastische Verformung der Ankerführung (6) gebildet wird.

2. Ankersystem (3) nach Anspruch 1, **dadurch gekennzeichnet, dass** der Magnetkern (4) im Bereich (10) der formschlüssigen Verbindung mit der Ankerführung (6) auf seiner mit der Ankerführung (6) in Verbindung kommenden Außenseite mit Aussparungen (4a) zur Aufnahme von durch die thermoplastische Verformung der Ankerführung (6) verformtem Kunststoff versehen ist.

3. Ankersystem (3) nach Anspruch 2, **dadurch gekennzeichnet, dass** die Aussparungen (4a) durch Rillen, Nuten, Vertiefungen oder dergleichen gebildet werden.

4. Ankersystem (3) nach Anspruch 1, **dadurch gekennzeichnet, dass** die Ankerführung (6) aus einem thermoplastischen Kunststoffmaterial besteht.

5. Ankersystem (3) nach Anspruch 1, **dadurch gekennzeichnet, dass** zur Rückstellung des Magnetankers (5) eine Ankerfeder (9) vorgesehen ist.

6. Ankersystem (3) nach Anspruch 5, **dadurch gekennzeichnet, dass** sich die Ankerfeder (9) mit einem Ende am Magnetanker (5) und mit einem anderen Ende an einem Widerlager abstützt.

7. Ankersystem (3) nach Anspruch 6, **dadurch gekennzeichnet, dass** sich die Ankerfeder (9) mit dem einen Ende an einer flanschartigen Erweiterung (5a) des Magnetankers (5) abstützt und das Widerlager durch einen im Inneren der Ankerführung (6) ausgebildeten Absatz (6a) gebildet wird.

8. Ventilsystem (1) mit einem Ventilkörper (2) und einem im Ventilkörper (2) montierten Ankersystem (3) gemäß einem oder mehreren der Ansprüche 1 bis 4.

9. Ventilsystem (1) nach Anspruch 8, **dadurch gekennzeichnet, dass**
- das Ankersystem (3) zur Rückstellung des Magnetankers (4) eine Ankerfeder (9) aufweist,
- der Ventilkörper (2) derart ausgebildet ist, dass das Ankersystem (3) unter Kompression der Ankerfeder (9) bei der Montage axial verschiebbar im Ventilkörper (2) geführt ist und
- die Ankerführung (6) und der Ventilkörper (2) in einer Kompressionsstellung der Ankerfeder (9), die einem gewünschten Öffnungsdruck des Ventilsystems (1) entspricht, miteinander fixiert sind.

10. Magnetventil (11) mit einer Magnetspule (12) und einem Ventilsystem (1) gemäß Anspruch 8 oder 9.

11. Verfahren zur Herstellung eines Ventilsystems (1), **dadurch gekennzeichnet, dass**
- ein Magnetanker (5) zusammen mit einer Ankerfeder (9) in eine Ankerführung (6) aus Kunststoff eingesetzt wird,
- nachfolgend die Ankerführung (6) mit dem Magentanker (5) und der Ankerfeder (9) in einen Ventilkörper (2) unter Kompression der Ankerfeder (9) eingeschoben wird,
- die Kompressionsstellung der Ankerfeder (9), die einem gewünschten Öffnungsdruck des Ventilsystems (1) entspricht, durch Relativverschiebung von Ankerführung (6) und Ventilkörper (2) eingestellt wird,
- die Ankerführung (6) und der Ventilkörper (2) in der Kompressionsstellung, die dem gewünschten Öffnungsdruck des Ventilsystems (1) entspricht, miteinander fixiert werden,
- an einem vom Ventilkörper (2) abgewandten Ende der Ankerführung (6) ein Magnetkern (4) in die Ankerführung (6) auf ein vorgegebenes Maß eingeschoben wird und
- schließlich der Magnetkern (4) und die Ankerführung (6) durch lokale thermoplastische Verformung der Ankerführung (6) miteinander verbunden werden.

12. Verfahren nach Anspruch 11,
**dadurch gekennzeichnet, dass** die thermoplastische Verformung durch Erwärmung einer Fügestelle und anschließendes Umformen erfolgt.

13. Verfahren nach Anspruch 11,
**dadurch gekennzeichnet, dass** die thermoplastische Verformung durch
- einen Energieeintrag über den Magnetkern (4) erfolgt oder
- einen Energieeintrag über die Ankerführung (6) im Bereich der herzustellenden formschlüssigen Verbindung erfolgt oder
- separate Erwärmung von Magnetkern (4) und Ankerführung (6) und anschließendes Fügen erfolgt.

14. Verfahren nach Anspruch 11, **dadurch gekennzeichnet, dass** das Fixieren der Ankerführung (6) in dem Ventilkörper (2) mittels Laserstrahlschweißen erfolgt.

## Claims

1. Armature system (3) for a solenoid valve (11), comprising a magnet core (4), a magnet armature (5) and a tubular armature guide (6) for guiding the magnet armature (5), wherein the armature guide (6) is made of plastic and the magnet core (4) is connected to the armature guide (6) via a form-fitting connection,
**characterised in that** the form-fitting connection is formed by means of a local thermoplastic deformation of the armature guide (6).

2. Armature system (3) according to claim 1, **characterised in that**, in the area (10) of the form-fitting connection to the armature guide (6), the magnet core (4) is provided, on its outer side, which comes into contact with the armature guide (6), with recesses (4a) for receiving plastic deformed by means of the thermoplastic deformation of the armature guide (6).

3. Armature system (3) according to claim 2, **characterised in that** the recesses (4a) are formed by notches, grooves, depressions or the like.

4. Armature system (3) according to claim 1, **characterised in that** the armature guide (6) is made of a thermoplastic plastic material.

5. Armature system (3) according to claim 1, **characterised in that** an armature spring (9) is provided for resetting the magnet armature (5).

6. Armature system (3) according to claim 5, **characterised in that** the armature spring (9) abuts the magnet armature (5) at one end and abuts an abutment at another end.

7. Armature system (3) according to claim 6, **characterised in that** the armature spring (9) abuts a flange-like extension (5a) of the magnet armature (5) at one end and the abutment is formed by a shoulder (6a) designed in the interior of the armature guide (6).

8. Valve system (1), comprising a valve body (2) and an armature system (3) mounted in the valve body (2) in accordance with one or more of claims 1 to 4.

9. Valve system (1) according to claim 8, **characterised in that**
- the armature system (3) has an armature spring (9) for resetting the magnet armature (4),
- the valve body (2) is designed in such a way that the armature system (3) is guided axially displaceably in the valve body (2) during assembly, with compression of the armature spring (9) and
- the armature guide (6) and the valve body (2) are fixed together in a compression position of the armature spring (9) that corresponds to a desired opening pressure of the valve system (1).

10. Solenoid valve (11) with a magnetic coil (12) and a valve system (1) in accordance with claim 8 or 9.

11. Method for producing a valve system (1), **characterised in that**
- a magnet armature (5) is inserted together with an armature spring (9) into a plastic armature guide (6),
- subsequently, the armature guide (6) with the magnet armature (5) and the armature spring (9) is pushed into a valve body (2) with compression of the armature spring (9),
- the compression position of the armature spring (9), which corresponds to a desired opening pressure of the valve system (1), is set by means of relative displacement of the armature guide (6) and the valve body (2),
- the armature guide (6) and the valve body (2) are fixed together in the compression position corresponding to the desired opening pressure of the valve system (1),
- at an end of the armature guide (6) facing away from the valve body (2), a magnet core (4) is inserted into the armature guide (6) to a predetermined extent and
- finally, the magnet core (4) and the armature guide (6) are connected to one another by means of local thermoplastic deformation of the armature guide (6).

12. Method according to claim 11, **characterised in that** the thermoplastic deformation is carried out by heating a joint and subsequent forming.

13. Method according to claim 11, **characterised in that** the thermoplastic deformation takes place, wherein
- an energy input takes place via the magnet core (4) or
- an energy input takes place via the armature guide (6) in the area of the form-fitting connection to be produced or
- separate heating of the magnet core (4) and armature guide (6) and subsequent joining take place.

14. Method according to claim 11, **characterised in that** the armature guide (6) is fixed in the valve body (2) by means of laser welding.

## Revendications

1. système d'armature (3) pour une électrovanne (11) comprenant un noyau magnétique (4), une armature magnétique (5) et un guide d'armature (6), de forme tubulaire, servant à guider l'armature magnétique (5), où le guide d'armature (6) est en matière plastique et le noyau magnétique (4) est relié au guide d'armature (6) par un assemblage obtenu par complémentarité de forme,
**caractérisé en ce que** l'assemblage par complémentarité de forme est formé par une déformation thermoplastique locale du guide d'armature (6).

2. système d'armature (3) selon la revendication 1, **caractérisé en ce que** le noyau magnétique (4), dans la zone (10) de l'assemblage par complémentarité de forme avec le guide d'armature (6), est doté, sur sa face extérieure venant au contact du guide d'armature (6), d'évidements (4a) servant à recevoir de la matière plastique ayant été déformée par la déformation thermoplastique du guide d'armature (6).

3. système d'armature (3) selon la revendication 2, **caractérisé en ce que** les évidements (4a) sont formés par des encoches, des rainures, des creux ou par des éléments similaires.

4. système d'armature (3) selon la revendication 1, **caractérisé en ce que** le guide d'armature (6) se compose d'un matériau thermoplastique.

5. système d'armature (3) selon la revendication 1, **caractérisé en ce qu'**il est prévu un ressort d'armature (9) servant à la remise à la position initiale de l'armature magnétique (5).

6. système d'armature (3) selon la revendication 5, **caractérisé en ce que** le ressort d'armature (9) vient en appui, à une extrémité, sur l'armature magnétique (5) et, à une autre extrémité, sur une butée.

7. système d'armature (3) selon la revendication 6, **caractérisé en ce que** le ressort d'armature (9) vient en appui, à l'une des extrémités, sur une extension (5a) en forme de bride de l'armature magnétique (5), et la butée est formée par un épaulement (6a) configuré à l'intérieur du guide d'armature (6).

8. système de vanne (1) comprenant un corps de vanne (2) et un système d'armature (3) monté dans le corps (2) de la vanne selon l'une quelconque ou plusieurs des revendications 1 à 4.

9. système de vanne (1) selon la revendication 8, **caractérisé en ce que** :
- le système d'armature (3) présente un ressort d'armature (9) servant à la remise à la position initiale de l'armature magnétique (5),
- le corps (2) de la vanne est conçu de manière telle, que le système d'armature (3), sous l'effet de la compression du ressort d'armature (9) lors du montage, soit guidé dans le corps (2) de la vanne en étant déplaçable axialement, et
- le guide d'armature (6) et le corps (2) de la vanne sont fixés l'un à l'autre dans une position de compression du ressort d'armature (9), ladite position de compression correspondant à une pression d'ouverture souhaitée du système de vanne (1).

10. Electrovanne (11) comprenant une bobine de solénoïde (12) et un système de vanne (1) selon la revendication 8 ou 9.

11. Procédé de fabrication d'un système de vanne (1), **caractérisé en ce que** :
- une armature magnétique (5) associée à un ressort d'armature (9) est introduite dans un guide d'armature (6) en matière plastique,
- le guide d'armature (6), qui contient l'armature magnétique (5) et le ressort d'armature (9), est inséré ensuite dans un corps (2) de la vanne sous l'effet de la compression du ressort d'armature (9),
- la position de compression du ressort d'armature (9), qui correspond à une pression d'ouverture souhaitée du système de vanne (1), est ajustée par le déplacement relatif du guide d'armature (6) et du corps (2) de la vanne,
- le guide d'armature (6) et le corps (2) de la vanne sont fixés l'un à l'autre dans la position de compression qui correspond à la pression d'ouverture souhaitée du système de vanne (1),
- au niveau d'une extrémité du guide d'armature (6), ladite extrémité étant placée à l'opposé du corps (2) de la vanne, un noyau magnétique (4) est inséré dans le guide d'armature (6) sur une longueur prédéterminée, et
- enfin, le noyau magnétique (4) et le guide d'armature (6) sont assemblés l'un à l'autre sous l'effet d'une déformation thermoplastique locale du guide d'armature (6).

12. Procédé selon la revendication 11, **caractérisé en ce que** la déformation thermoplastique se produit par chauffage d'un point de jonction et par formage ayant lieu ensuite.

13. Procédé selon la revendication 11, **caractérisé en ce que** la déformation thermoplastique
- se produit sous l'effet d'une entrée d'énergie via le noyau magnétique (4), ou bien
- se produit sous l'effet d'une entrée d'énergie via le guide d'armature (6) dans la zone de l'assemblage par complémentarité de forme à réaliser, ou bien
- se produit sous l'effet d'un chauffage séparé du noyau magnétique (4) et du guide d'armature (6), et sous l'effet de la jonction ayant lieu ensuite.

14. Procédé selon la revendication 11, **caractérisé en ce que** la fixation du guide d'armature (6) dans le corps (2) de la vanne est réalisée au moyen d'un soudage par faisceau laser.
